# EUROPEAN PATENT APPLICATION

(11) **EP 2 216 623 A1**
(43) Date of publication of application: **11.08.2010**
(21) Application number: 07816633.7
(22) Date of filing: 22.10.2007
(51) Int. Cl.: G01C 15/00, G01D 11/00

(54) **LASER LINE-MARKING DEVICE**

(71) Applicant: Changzhou Huada Kejie Opto-Electro Instrument CO., LTD., No. 16 Meihua Road Zhonglou Economic Development District Changzhou Jiangsu 213023 (CN)
(72) Inventor: ZHANG, Ou, Jiangsu 213023 (CN); WANG, Biwen, Jiangsu 213023 (CN)
(74) Representative: Bergmeier, Werner
(86) International application number: PCT/CN2007/003020
(87) International publication number: WO 2009/052647

(57) **Abstract**

A laser levelling device includes a main body, a rod suspended from the main body, and a central locking assembly disposed on the lower portion of the main body. The central locking assembly comprises a linkage plate, a slider, a guiding plate, and two clamping plates, the linkage plate and the guiding plate are provided with a central hole respectively, the rod may pass through the central holes, the linkage plate is provided with two linkage slots along its radial direction, and two linkage cylinders may protrude downwardly from the linkage plate, the slider is provided with slider slots for receiving the linkage cylinders, from a side surface of the slider may protrude a slider cylinder which may extend out of the housing, on the side of the slider which is adjacent to the central hole is formed a slider recess , above the linkage plate is the guiding plate, from which a guiding cylinder is protruding and is received in the above slider recess, the guiding plate is provided with two guiding slots which are arranged in parallel and tangent to the central hole respectively, each clamping plate comprising a curved recess which is adjacent to the central hole and a clamping cylinder which is received in the guiding slots. The rod can be fixed accurately and easily by the two locking plate in locked state.

## Description

### Technical Field

The invention relates to a laser levelling device, in particular, to a laser levelling device comprising a central locking assembly for fixing the rod conveniently.

### Background of the Invention

A laser levelling device is widely used for projecting a visible marking consisting of a horizontal and/or a vertical line (or spot) on walls, floors or ceilings accurately by laser in the indoor decoration. The automatic laser levelling device can keep the accuracy of the projected horizontal and vertical line and 90 degree angle between them within a given inclination range. The laser levelling device generally has a pendulum and under the gravitational action of the pendulum, the laser lines projected by the lasers mounted on the pendulum can maintain the horizontal and/or vertical position, which further insures the accuracy of the construction. However, in the construction site, the operating environment usually is very severe, and it is hard to avoid vibration. In addition, during the transport, the pendulum must be fixed in order to avoid the damage of the device caused by the vibration of the pendulum. Furthermore, in another use, the automatic laser levelling device with its pendulum in locked state can be placed in a tilted position by another auxiliary device for slope aligning.

To solve the above problems, the conventional laser levelling device may include a clamping device, which may use a clamping plate and move the pendulum to one side of the device and clamp the pendulum on an inner wall.

However, such a clamping device can cause some problems. Firstly, because the pendulum is clamped on the inner side wall, the bearing suspending the pendulum may be subject to a lateral force, resulting in the damage of the bearing and lower operation accuracy. Secondly, the use of the laser levelling device with its pendulum clamped on the inner side wall is limited. In order to insure high operational accuracy of the laser levelling device, the pendulum must be in its free state, and in order for the pendulum to maintain such a state, the forces on the bearing must be uniform. But, the above clamping device could not fulfill the above functions, additionally it is not easy to use.

### Summary of the Invention

An object of the invention is to overcome the above problems. The object is achieved by providing a laser levelling device comprising a central locking assembly for fixing the rod easily.

In one aspect of the invention, a laser levelling device of the invention may comprise a main body, a rod suspended from the main body, and a central locking assembly disposed on the lower portion of the main body; the central locking assembly comprises a linkage plate, a slider, a guiding plate, and two clamping plates, the linkage plate and the guiding plate are provided with a central hole respectively, the rod may pass through the central holes, the linkage plate may be fastened to the main body, the linkage plate is provided with two linkage slots along its radial direction, and two linkage cylinders may protrude downwardly from the linkage plate, the slider is provided with slider slots for receiving the linkage cylinders, from a side surface of the slider may protrude a slider cylinder, on the side of the slider which is adjacent to the central hole is formed a slider recess, above the linkage plate is the guiding plate, from which a guiding cylinder is protruding and is received in the above slider recess, the guiding plate is provided with two guiding slots which are arranged in parallel and tangent to the central hole respectively, each clamping plate comprising a curved recess which is adjacent to the central hole and a clamping cylinder which is received in the guiding slot.

In another aspect of the invention, on the inner circumference of the linkage plate, in a position where the slider recess is disposed, is formed a linkage recess for receiving the said guiding cylinder; the line on the linkage plate connecting the points for fixing two linkage cylinders is not parallel to the linkage slots; the main body may further comprise a housing; the housing is provided with a rotary handle, the rotary handle is provided with a driving lever, and the driving lever is provided with a lever recess for receiving the said slider cylinder; a positioning plate is provided between the rotary handle and the driving lever; a positioning bulge is provided on the top part of the positioning plate.

According to the invention, the laser levelling device can clamp the rod in position accurately and easily such that the laser levelling device is protected from damage.

### Brief Description of the Drawings

The invention will be described in detail by means of embodiments and with reference to the drawings, in which:
**Fig. 1** is a perspective view of the laser levelling device of the invention;
**Fig. 2** is a perspective view of the laser levelling device of the invention, with the housing removed.
**Fig. 3** is an exploded view of the rod and the central locking assembly of the laser levelling device of the invention;
**Fig. 4** is a perspective view of the rod and the central locking assembly of the laser levelling device of the invention in a released state
**Fig. 5** is a perspective view of the rod and the central locking assembly of the laser levelling device of the invention in a locked state.

### Detailed Description

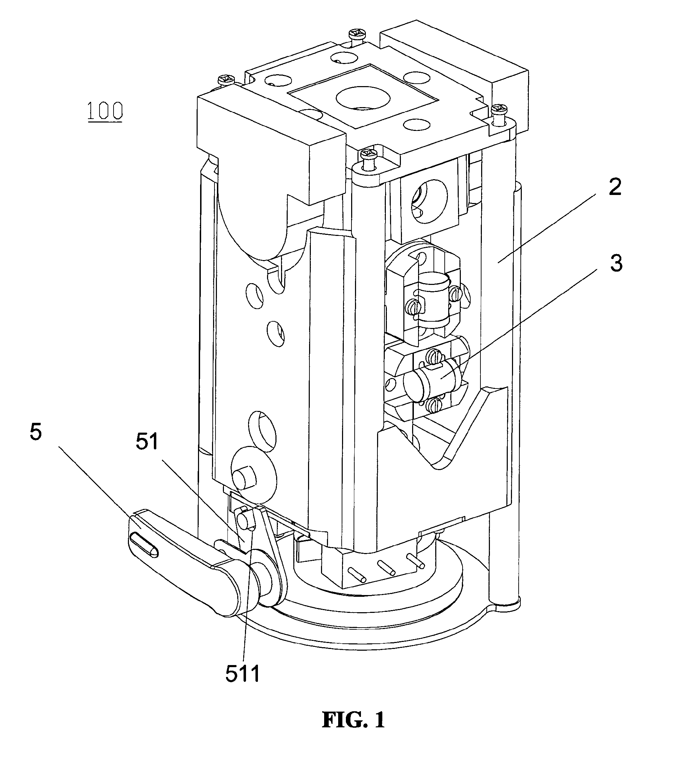

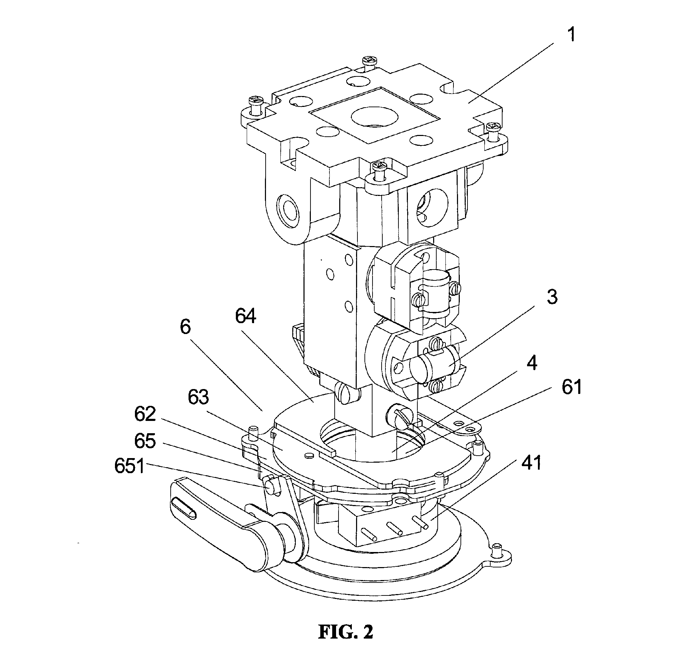

As shown in Fig. 1 and Fig. 2, the laser levelling device 100 may comprise a main body 1 and a housing 2 for housing the main body 1. A rod 4 is suspended from the lower portion of the main body 1 and is provided with a laser 3. Said laser 3 is used to project a laser line or spot. A pendulum 41 is disposed on the free end of the rod 4. The housing 2 is provided with a rotary handle 5, and the rotary handle 5 is provided with a driving lever 51, a lever recess 511 is formed on the free end of the driving lever 51. A central locking assembly 6 is disposed on the lower portion of the main body 1. At the center of the central locking assembly 6 is a central hole 61 for being passed through by the rod 4. The central locking assembly 6 may comprise a linkage plate 62, a guiding plate 63 above the linkage plate 62, two clamping plates 64 above the guiding plate 63, and a slider 65 below the linkage plate 62. A slider cylinder 651 may protrude from a side surface of the slider 65 and is received in the lever recess 511.

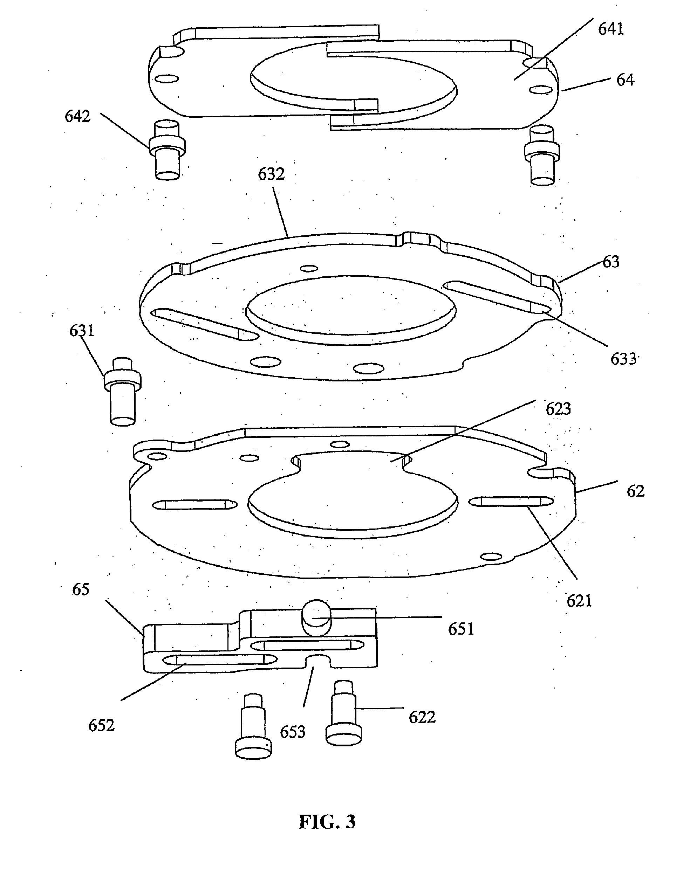

As shown in Fig. 2 and Fig. 3, the linkage plate 62 is fastened to the main body 1 by screws (not shown), and is provided with two unconnected linkage slots 621 along its radial direction and arranged in a line. Two linkage cylinders 622 may protrude downwardly from the linkage plate 62, the slider 65 is provided with slider slots 652 for receiving the linkage cylinder 622. On the side of the slider 65 which is adjacent to the central holes 61 is formed a slider recess 653. The line connecting the two points for fixing the linkage cylinder 622 is not parallel to the linkage slots 621. On the slider 65, there are two slider recesses 653 arranged in parallel. Thus, the turning torque generated by the whole slider 65 can be increased. The guiding plate 63 is provided above the linkage plate 62. A guiding cylinder 631 may protrude downwardly from the guiding plate 63 and is received in the slider recess 653. On the inner circumference of the linkage plate 62, in a position where the slider recess is disposed, may form a linkage recess 623. The guiding plate 63 is provided with two guiding slots 633 arranged in parallel and tangent to the central hole 61. On the outer circumference of the guiding plate 63 may form a stop recess 632, which may cooperate with the main body 1 to prevent the guiding plate 63 from rotating excessively. Each of the two clamping plates 64 is provided with a curved recess 641 which is adjacent to the central hole 61 and a clamping cylinder 642, which is received in the guiding slots 633.

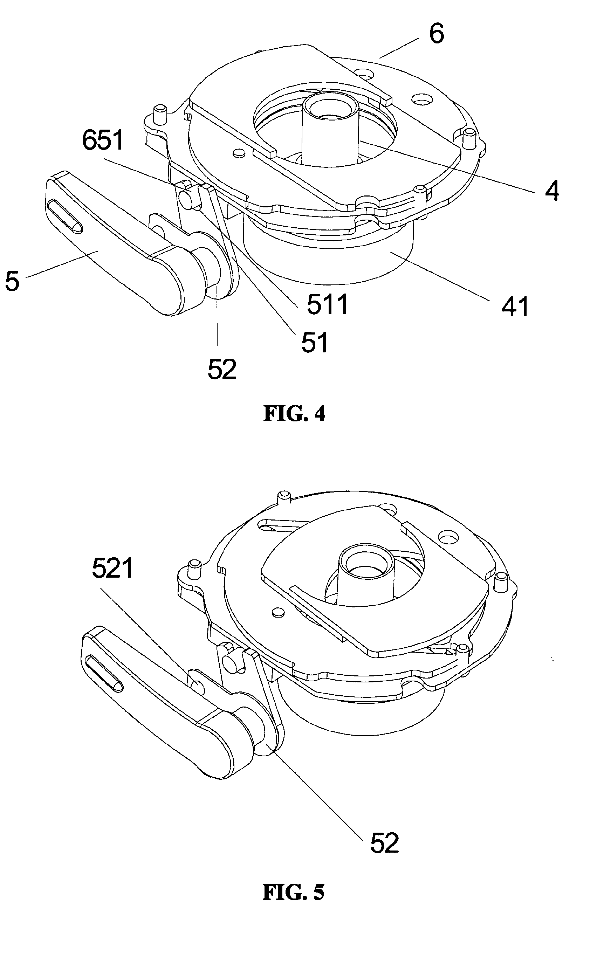

As shown in Fig. 3-5, a positioning plate 52 is provided between the rotary handle 5 and the driving lever 51, and a positioning bulge 521 is provided on the top part of the positioning plate 52. The positioning bulge 521 can be fixed relative to the inner wall of the housing 2 (see Fig. 1) to increase the friction between the rotary handle 5 and the housing 2 and to prevent the rotary handle 5 from rotating accidentally.

In operation, when the central locking assembly 6 is in a released state, the rod 4 may pass through the central holes 61 and is in a vertical position under the gravitational action of the pendulum 41. At this time, the guiding cylinder 631 is located at one end of the linkage recess 623, and each linkage cylinder 622 is located at one end of the slider slots 652. The clamping cylinder 642 is located at the outer end of the guiding slots 633, and is located at the outer end of the linkage slots 621 via the guiding slots 633. When turning the rotary handle 5, the lever recess 511 of the driving lever 51 may drive the slider cylinder 651 into horizontal movement, and the slider 65 may cause the guiding cylinder 631 to move along a circular path. Thus, the whole guiding plate 63 may rotate to make the clamper cylinder 642 move inwardly along the guiding slots 633. Because the clamping cylinders 642 are fastened to the clamping plates 64, the clamping plates 64 can move inwardly, locking the rod in position. Moreover, under the guidance of the two curved recess 641, the rod 4 can be centered at the center of the central hole 61. The locking assembly 6 may return to the released state simply by reversing the above process.

In summary, the object of the invention is achieved by using the laser levelling device of the invention. When the laser levelling device of the invention with its locking assembly 6 in the locked state is placed in a horizontal position, it can ensure that the rod 4 keeps the vertical position automatically under the action of gravity. Thus, the laser line or spots projected by the laser 3 can still be kept in the horizontal or vertical position. With the locking assembly in the locked state, the laser line or spot can maintain their original position. Moreover, when performing construction work, by using an external slope control device, the cross consisting of the horizontal and the vertical line projected by the laser levelling device can be used to obtain a steady slope line with a given inclined angle. In addition, during transport and storage, the laser levelling device with its rod locked is protected from damage caused by the impact generated by the over-rocking of the pendulum. More particularly, in the prior art, with the pendulum locked for long term and 4 mini bearings supporting the pendulum be subjected to lateral forces, the device can be damaged or its operation accuracy may be greatly lowered and hence the device may fail. In contrast, the laser levelling device of the invention can avoid all of this. In addition, the locking assembly 6 according to the invention is easy to use, and the locked rod can be centered under the guidance of the curved recess.

## Claims

1. A laser levelling device, comprising a main body, a rod suspended from the main body, and a central locking assembly disposed on the lower portion of the main body; the central locking assembly comprising a linkage plate, a slider, a guiding plate, and two clamping plates, the linkage plate and the guiding plate are provided with a central hole respectively, the rod may pass through the central holes, the linkage plate may be fastened to the main body, the linkage plate is provided with two linkage slots along its radial direction, and two linkage cylinders may protrude downwardly from the linkage plate, the slider is provided with slider slots for receiving the linkage cylinders, from a side surface of the slider may protrude a slider cylinder, on the side of the slider which is adjacent to the central hole is formed a slider recess, above the linkage plate is the guiding plate, from which a guiding cylinder is protruding and is received in the above slider recess, the guiding plate is provided with two guiding slots which are arranged in parallel and tangent to the central hole respectively, each clamping plate comprising a curved recess which is adjacent to the central hole and a clamping cylinder which is received in the guiding slot.

2. A laser levelling device according to Claim 1, wherein, on the inner circumference of the linkage plate, in a position where the slider recess is disposed, is formed a linkage recess for receiving the said guiding cylinder,

3. A laser levelling device according to Claim 1, wherein, the line on the linkage plate connecting the points for fixing two linkage cylinders is not parallel to the linkage slots.

4. A laser levelling device according to Claim 1, wherein, the said main body may further comprise a housing.

5. A laser levelling device according to Claim 4, wherein, the housing is provided with a rotary handle, the rotary handle is provided with a driving lever, and the driving lever is provided with a lever recess for receiving the said slider cylinder.

6. A laser levelling device according to Claim 5, wherein, a positioning plate is provided between the rotary handle and the driving lever.

7. A laser levelling device according to Claim 6, wherein, a positioning bulge is provided on the top part of the positioning plate.
